# EUROPEAN PATENT APPLICATION

(11) **EP 1 736 612 A2**
(43) Date of publication of application: **27.12.2006**
(21) Application number: 06445047.1
(22) Date of filing: 15.06.2006
(51) Int. Cl.: E04D 3/362, E04D 15/04

(54) **A method and apparatus for manufacturing seam-welded roof coverings of stainless steel**

(30) Priority: 22.06.2005 SE 0501457
(71) Applicant: Bjarnes System AB, 151 02 Södertälje (SE)
(72) Inventor: Svanberg, Bjarne, 152 57 Södertälje (SE)
(74) Representative: Sundström, Per Olof

(57) **Abstract**

A method and a welding unit for producing a seam-welded tin roof made of roofing sheets (30) with large flange (31) and low flange (32), the low flange on a sheet (30) placed on the underlay (50) being secured to the load-bearing structure of the roof by means of a bracket (40) comprising a base plate secured to the load-bearing roof structure, and a tongue protruding upwardly from the roof underlay, said tongue being connected to the low flange (32), and the large flange (31) on the following roofing sheet (30) being joined above the low flange of the previous sheet (30), and the join between low flange and large flange being seam-welded (55) along its length. A bracket (40) is used, the tongue of which has an end portion (41) which is bent out approximately 90° so as to lie parallel, close to and above the end portion (34) of the low flange (32), the end portion lying parallel with the main surface of the roofing sheet (30). The join between large flange and low flange is folded at its upper portion for connection of the bracket (40) to the roofing sheets (30). The seam-welding (55) is performed after the folding, using a welding unit (61, 62, 72) resting on the flange (39) and being displaced along said flange, the welding unit being provided with welding jaws (61, 62) applied to opposing sides of the upwardly protruding waist section of the flange-joint, spaced above the main surface of the roofing sheets (30).

## Description

The present invention relates to a method and apparatus of the type described in the preamble to the independent method claim and the independent apparatus claim, respectively.

In practice seam-welded roof coverings are manufactured from stainless steel by metal strips (sheets) with bent-up side edge parts being placed side by side on an underlay and secured to this by brackets (sliding brackets). These brackets have a base element which is laid flat on the underlay and secured thereto, by screws for instance, and a tongue protruding perpendicularly upwards from the base element and secured by means of spot-welding to the bent-up edge of a sheet that has already been laid. The next strip of metal is then laid beside and close to the first strip so that one side edge is placed close to the side edge of the previous sheet, joined to the bracket. Thereafter the two substantially parallel, upright sides of the sheets are seam-welded together, the bracket tongue also being welded into the seam. The seam-welding unit rests on the pile of sheets and makes marks on them. The metal strip is thin, e.g. 0.4 mm.

The seam welding seals the joint and secures the two adjacent metal strips to the underlay.

It is also already known for the bent-up side edges of the sheet to have shapes well known from flange-joining technology, i.e. a large flange and a low flange. The large flange comprises a generally inverted U-shaped section connected by one shank to one side edge of the main surface of the metal strip. The low flange comprises an L-shaped bent side edge portion of the metal strip, connected at substantially right angles to the other side edge of the main surface of the metal strip. The large flange and low flange are orientated and shaped so that the low flange is received in the large flange when two metal strips are joined together. However, the known example with such a traditional shape for the bent-up edges of the metal strip in the flange joint only serves to protect the join from rain prior to seam welding.

The known technology therefore requires spot-welding of the vertical tongue of the bracket to the low flange of the sheet laid first in order to secure this to the underlay.

The large flange should naturally also be connected to the bracket since traffic on the sheet laid last may result in an air pumping effect through the joint that is still open. Conventionally, therefore, the seam-welding operation is performed immediately after the large flange has been joined over the low flange.

The conventional technology for manufacturing roof coverings of seam-welded stainless steel sheets therefore entails certain drawbacks, such as a seam-welding operation being performed immediately after joining of the large and low flanges. Furthermore, the tongue of the bracket is spot-welded to the low flange to secure it to the underlay prior to joining the large flange on the low flange. Since the seam-welding unit runs along the main surfaces of the strip of metal, sliding or rolling marks will often appear on these roofing sheets, with risk of damage since the sheets are rather thin.

One object of the invention is therefore to offer a method that simplifies and rationalizes the manufacture of welded roof coverings of stainless steel secured by brackets.

Another object is to provide apparatus that can be used to partially or wholly eliminate at least some of the inconveniences described in connection with the seam welding.

The method in accordance with the invention is defined in the appended independent method claim.

The apparatus is defined in the appended apparatus claim.

An important feature of the invention is that metal strip with both large and low flanges is used for the roof covering, as well as brackets which, besides having a vertical bent end portion with a height corresponding to the large and low flanges, also have an end portion bent at right angles thereto, which will lie substantially parallel with the main surface of the metal strip. The favourable effect is thus obtained that single folding (bending) of the free edge part of the large flange enables temporary securing of both large and low flanges to the bracket. The need for spot-welding of the bracket tongue to the low flange is thus avoided. Furthermore, the entire surface of the roof can be covered with metal strip elements when using the laying technique described. The metal strips are joined longitudinally in conventional manner.

When the metal strips of the roof covering have been laid out, joined and temporarily secured to the underlay with brackets, the seam-welding can then be performed for all the joined pairs of large and low flanges and intermediate bracket tongues. This is considerably more efficient, saving both time and expense. In the seam-welding operation the metal sheets are joined tightly together and also welded to the intermediate upright tongues of the brackets. The preliminary single folding has the function of folding under the sharp metal edges. The folded joint portion, generally lying parallel to the main surface of the metal sheets can therefore carry the seam-welding unit above/outside the seam-welded joint so that the tightness of the roof construction is not jeopardized by contact with the welding unit. The tracks and marks that arise if the welding unit is allowed to slide along the main surfaces of the roofing sheets are also avoided.

Another advantage is that the welding unit can also be provided with a support arm that grips below the upper part of the angled flange joint, thus effectively preventing the welding unit from lifting off the joined area of the roofing sheets. The pressure unit can be guided laterally on the large flange since the welding jaws, usually shaped as rollers, centre and guide the welding unit towards the large flange. The finger or arm gripping below the uppermost flange part can therefore be moved between both sides of the welding unit so that it can be driven one way or the other along a flange joint.

The gripping finger/arm can be passed in below the uppermost flap of the large flange at the end of this. Alternatively the operator can cut off the correct length of the first flap of the large flange to enable the gripping finger/arm to be passed below it. Alternatively the gripping finger may be movable enabling it to be displaced straight out from the welding unit and later re-introduced towards its central, longitudinal mid-region.

Basically the invention entails that, in order to manufacture seam-welded stainless steel roof coverings, the conventional flange folding technology is used, including brackets with perpendicularly bent tongue ends and that each flange joint is at least single folded at all joins between the large and low flanges of the roofing sheets. All the flange joints can then be seam-welded along their length.

The invention will be described in the following by way of example, with reference to the accompanying drawings.
- Figure 1: shows schematically a flange joint with bracket for joining.
- Figure 2: shows the completed joint.
- Figure 3: shows a seam-welding machine for seam-welding the flanged joint in accordance with Figure 2.
- Figure 4: illustrates the joint in accordance with Figure 2, with seam welding.
- Figure 5: shows schematically a view along the line V -V in Figure 3.
- Figure 6: illustrates schematically a modified embodiment of the seam-welding machine as shown in Figure 3.
- Figure 7: illustrates schematically a further development of the seam-welding machine.
- Figure 8: shows schematically a view along the line VIII-VIII in Figure 2.

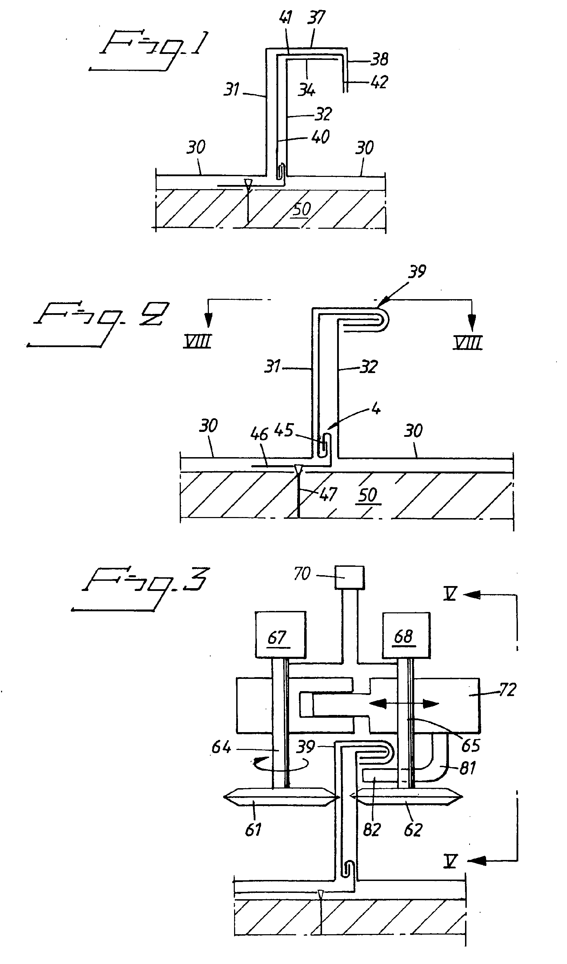

Figure 1 shows schematically a cross section through a joint between two upwardly bent adjacent side edge portions 31, 32 of sheets 30. Each sheet 30 has at one edge the side portion 31 and at the other edge the side portion 32. The side portions 31, 32 are normally called large flange and low flange, respectively, and their cross section is as shown. A bracket 40 is fitted on the low flange to secure the sheets 30 to the underlay 50, and secured in the underlay 50 with a screw or the like, after which the large flange 31 of the following sheet 30 is fitted over the low flange and over the channel-shaped, bent securing tongue of the bracket to obtain the configuration shown in Figure 1.

According to the invention the sheets 30 consist of stainless steel and the upwardly folded side edge portions 31, 32 of the sheets shall be joined by means of a welding seam. A novelty of the invention is in utilizing brackets 40 the tongue of which protruding upwardly from the underlay 50 has a portion bent outwardly 90°, the outermost end of which is bent down approximately 90° to form a channel section, the opening of which faces the underlay 50 to receive the end portion of the low flange 32 situated above the main portion of the sheet 30 and extending parallel thereto.

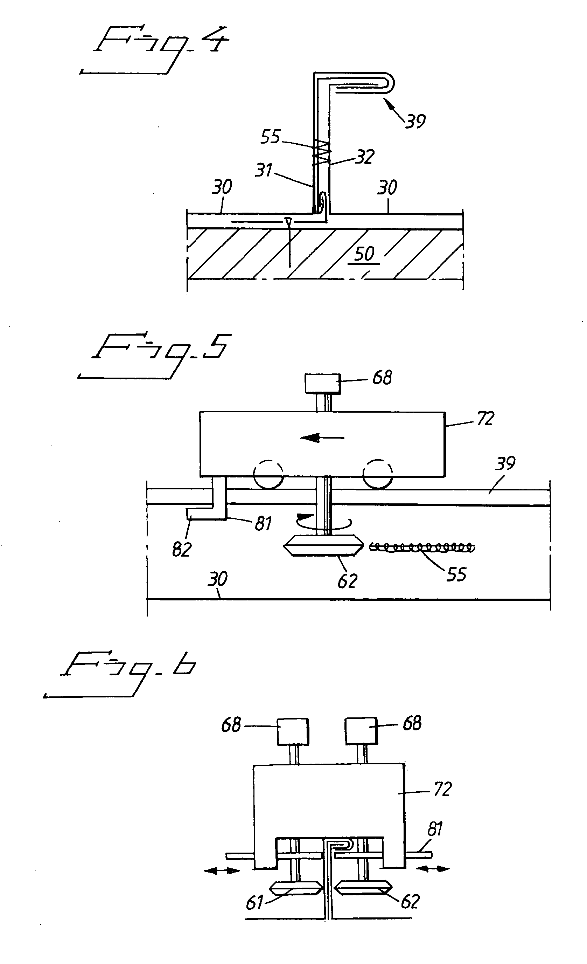

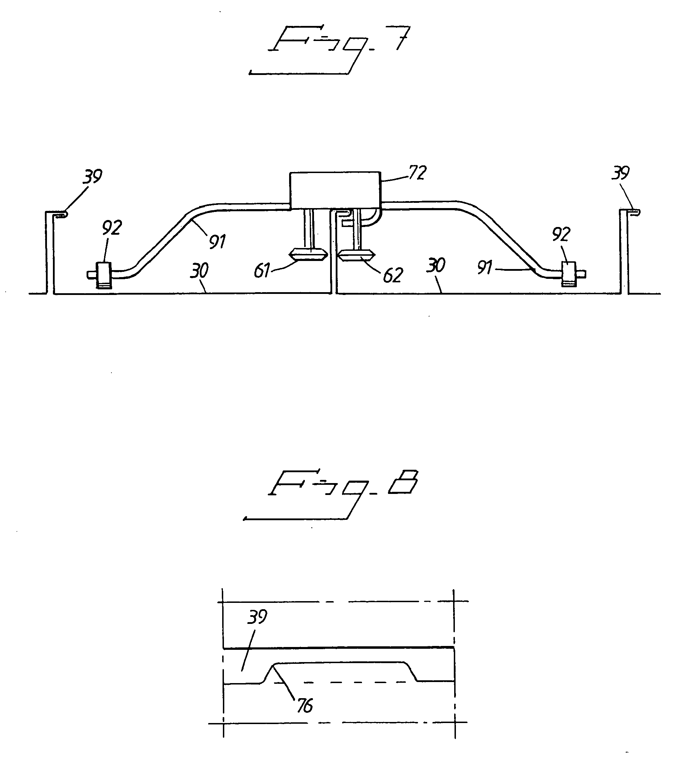

As illustrated in Figure 2 the end portion 38 of the large flange is folded in, together with the end portion 42 of the bracket, underneath the end portion 34 of the low flange to obtain the configuration shown in Figure 2, so that the large flange 31 and the low flange 32 are secured to the bracket 40 and thus to the underlay 50. A roof surface of optional size can be covered with sheets 30 which are joined and connected in the manner shown in Figures 1 and 2. Thereafter the upwardly folded side edge portions 31, 32 of the sheets can be seam-welded along their length with a welding unit of the type shown in Figure 3. The apparatus 3 has a body 60 resting on the flange 39, possibly via wheels, and supports a pair of welding jaws 61, 62 that may be in the form of rotatable discs carried by central shafts 64, 65 that are in turn rotated by drive means 67, 68. The discs 61, 62 may be supplied with current from a current source 70 via the shafts 64, 65, for instance.

The shaft 65 is shown arranged for parallel displacement in relation to the body of the apparatus 72. Since the shaft 65 can be parallel displaced the distance between the discs 61, 62 can be increased, enabling them to be lowered on each side of the flange 39.

The body 72 of the welding unit may also be provided with an arm 81, the end 82 of which engages below the flange 39 when the body 72 rests above the flange 39, and which is preferably movable, e.g. can be swung so as to be easily inserted below the flange 39. In a seam-welding operation, therefore, the arm 81 will prevent the discs 61, 62 from being lifted from the intended position for the welding seam.

As an alternative to being able to swing to and from a position below the flange 39, the arm 81 may be in the form of a rod that is linearly displaceable to and from a position in which its end 82 engages below the flange 39 as shown in Figure 6. Figure 6 shows an arm 81 on each side of the apparatus to permit the direction of displacement to be selected in relation to the joint to be welded.

The body 72 may consist of two parts that are movable transversely to the welding direction of the unit and are provided with a locking device for locking in a chosen position in relation to each other, as shown in Figure 3. The unit may thus have a fixed arm 81 on one and/or the other part of the body 72 for engagement below the flange 39.

Usually it is less desirable to have to arrange one of the shafts 64, 65 displaceable in parallel to allow the welding discs 61, 62 to assume their correct positions abutting the side edge portions 31, 32. If the shafts 64, 65 are slightly parallel displaced the discs 61, 62 of the welding unit can be passed over the pair of side edge portions 31, 32 from one end. Alternatively the closed single flange 39 may be provided with a recess 76 along a longitudinal section of the flange 39, as shown in Figure 8, to permit the discs 61, 62 of the welding unit to be easily lowered into contact with the side edge portions 31, 32 of the joint between two adjacent sheets 30.

In a particularly preferred embodiment of the invention the body of the welding unit 72 is provided with a laterally protruding support arm 91, at least on one side. The arm 91 carries a support wheel 92 rotatably journalled to lie immediately above the side edge region of the roofing sheet, spaced from the side edge region being subjected to a welding operation. The body of the unit may also be provided on the opposite side with a laterally protruding support arm with support wheel 92. Both wheels 92 are situated a short distance above each sheet 30. As soon as the welding unit is tilted from its correct orientation on the single flange 79, the support wheel 92 comes into contact with the support surface and prevents further tilting and the wheel 92 can roll along the flange joint on the sheet.

When producing seam-welds on roof coverings of stainless steel sheets it is novel to utilize brackets with a tongue bent to form a channel to receive the end portion of the low flange and to secure the roofing sheets to the underlay via the bracket by means of a flanging operation that is performed before the seam-welding operation. This enables the seam-welding operation to be postponed to a suitable time, e.g. when substantially the whole roof has been covered with sheets that have been flange-joined in the manner described above.

Joining the flanges in this way when laying stainless steel roofs, means that the flange 39 also forms a firm track for the seam-welding unit so that it does not need to run along the surfaces of the sheets 30. Providing the seam-welding unit with an arm the end of which can be inserted below the joint flange 39 when the welding jaws are in contact with opposing sides of the joint, ensures that the welding unit cannot be lifted from the flange during the seam-welding operation. Since the tongue of the bracket is made of stainless steel of substantially the same material as the roofing sheets and its thickness is slight, e.g. around 0.15 mm, the bracket tongue can easily be connected to the roofing sheets when the sheets (which normally have a thickness of about 0.4 mm) are welded together with the welding-seam discussed above that is applied to the adjacent upwardly folded edge portions of the roofing sheets, thereby including the bracket tongue in the welding seam. Practical experiments have shown that the thickness of the bracket tongue should be less than 0.20 mm, otherwise there is a risk of the welding seam at the bracket tongue not being tight.

## Claims

1. A method for manufacturing a seam-welded tin roof made of roofing sheets (30) with large flange (31) and low flange (32), the low flange on a sheet (30) placed on the underlay (50) being secured to the load-bearing structure of the roof by means of a bracket (40) comprising a base plate secured to the load-bearing roof structure, and a tongue protruding upwardly from the roof underlay (50), said tongue being connected to the low flange (32), and the large flange (31) on the following roofing sheet being joined above the low flange of the previous sheet, and the joint between low flange (32) and large flange (31) being seam-welded (55) along its length, **characterised in that** a bracket (40) is used, the tongue of which has an end portion (41) which is bent out approximately 90° so as to lie parallel, close to and above the end portion (34) of the low flange (32), the end portion lying parallel with the main surface of the roofing sheet (30), that the join between large flange and low flange is folded at its upper portion for connection of the bracket (40) to the roofing sheets, and that the seam-welding is performed after the folding.

2. A method as claimed in claim 1, **characterised in that** a plurality of roofing sheets are laid out, joined and temporarily secured to the roof construction by means of brackets (40) connected to the roofing sheets (30) by folding in and that the seam-welding operation for the flanges (31, 32) is performed after several adjacent roofing sheets (30) have been secured to their roof brackets (40) by means of flanging.

3. A method as claimed in claim 1, **characterised in that** the seam-welding is performed using a welding unit (72) that rests on the flange and is displaced along it, the welding unit (72) having welding jaws applied to opposing sides of the upwardly protruding waist section of the flange join, spaced above the main surface of the roofing sheets.

4. A method as claimed in claim 3, **characterised in that** the welding unit (72) is provided with a finger end that engages under the side of the flange join facing the roof surface during operation.

5. A welding unit for use when performing a method as claimed in any one of claims 1-4, comprising a welding unit with two opposing welding jaws (61, 62), **characterised in that** the welding unit has a body (72) arranged to be carried by the roofing-sheet flange and to run along this, the welding jaws (61, 62) being located a distance below the sliding surface of the welding unit (72), said distance being less than the height of the roofing-sheet flange.

6. A welding unit as claimed in claim 5, **characterised in that** the body of the welding unit is provided with an arm (81) with an arm end (82) that, during operation, engages beneath the roofing sheet flange (39) in order to prevent the welding unit from being lifted off the flange (39).

7. A welding unit as claimed in claim 5 or claim 6, **characterised in that** arm end (82) is situated at a level between the welding jaws (61, 62) and the sliding surface of the flange (39).

8. A welding unit as claimed in any one of the preceding claims, **characterised in that** the welding jaws (61, 62) are arranged displaceable in relation to each other in a direction transversely to the welding direction of the welding unit.

9. A welding unit as claimed in any one of claims 5-8, **characterised in that,** at least one on side, the welding unit is provided with a laterally protruding support leg (91) with a support (92) close to the main surface of the roofing sheet (30) when the welding unit is correctly orientated to swing transversely to the longitudinal direction of the welding seam.
